# FASCICULE DE BREVET EUROPEEN

(11) **EP 1 150 478 B1**
(45) Date de publication et mention de la délivrance du brevet: **10.04.2013**
(21) Numéro de dépôt: 01401055.7
(22) Date de dépôt: 25.04.2001
(51) Int. Cl.: H04M 1/725

(54) **Réseau local de téléphonie radio ayant des capacités pour exploiter une messagerie informatique**
Lokales Telefonfunknetzwerk zur Verarbeitung von Computernachrichten
Local telephone radio network with the capability to operate computer messages

(30) Priorité: 26.04.2000 FR 0005289
(43) Date de publication de la demande: 31.10.2001
(73) Titulaire: SAGEMCOM BROADBAND SAS, 92500 Rueil Malmaison (FR)
(72) Inventeur: Sabatier, Pierre, 95800 Cergy Saint Christophe (FR)
(74) Mandataire: Bloch, Gérard

(56) Documents cités:
- EP-A- 0 895 433
- WO-A-92/15168
- "Phone.com UP.Mail", INTERNET CITATION, no. XP002165543, August 1999 (1999-08), URL - UNKNOWN

## Description

L'invention concerne un réseau local de téléphonie radio comprenant une base radio, connectée à un réseau de communication externe (RTC, RNIS, etc.), et un ou plusieurs combinés radios associés, pouvant se relier, ou s'apparier, à la base par liaison radio. A titre d'exemple, on peut citer un réseau local DECT. Les combinés radios comprennent un écouteur, un microphone, un clavier téléphonique et, le plus souvent, un afficheur rudimentaire. Pour des raisons de coût, de tels combinés ont une puissance et des capacités, notamment de mémoire, limitées.

Un réseau local selon la norme DECT est enseigné par exemple par EP-A-0895433.

De nombreux terminaux téléphoniques, notamment des téléphones cellulaires, sont aujourd'hui dotés de capacités Internet leur permettant d'émettre et de recevoir des messages électroniques à travers l'Internet et/ou de naviguer sur l'Internet. De tels terminaux intègrent tous les protocoles et applications Internet, nécessaires pour la messagerie et, éventuellement, la navigation, et doivent avoir une capacité mémoire et une puissance suffisantes pour les mettre en oeuvre.

Il n'est pas envisageable de fabriquer des combinés radios, de type DECT, dotés de capacités Internet, sans augmenter de façon rédhibitoire le coût de ces combinés.

La présente invention propose néanmoins d'exploiter la messagerie Internet, et plus généralement la messagerie informatique, à l'aide d'un combiné radio bon marché.

A cet effet, l'invention concerne un réseau téléphonique local comportant une base radio et au moins un combiné radio associé, dans lequel la base intègre des moyens de connexion à un réseau informatique et des moyens de messagerie informatique, et il est prévu des moyens d'interface homme-machine, permettant d'utiliser la messagerie, déportés dans le combiné, caractérisé par le fait que la base comprend des moyens de relève de messages dans une boîte à lettres du réseau informatique et des moyens de retransmission, vers le combiné, de messages relevés dans la boîte à lettres et lesdits moyens d'interface homme-machine comprennent un afficheur et des moyens pour faire défiler les messages sur l'afficheur.

Tous les protocoles et applications pour la messagerie sont intégrés dans la base et l'interface homme-machine, par l'intermédiaire de laquelle un utilisateur peut utiliser la messagerie, est déportée dans le combiné.

Les moyens permettant de récupérer les messages, reçus et provisoirement stockés dans la boîte à lettres, sont intégrés dans la base. Le combiné sert uniquement à visualiser les messages, par défilement sur l'afficheur.

WO-92 15 168A enseigne un réseau du type de celui du préambule de la revendication 1. Mais ce réseau comporte des bornes publiques incluant un serveur de messagerie : le message arrive d'office jusqu'à la borne finale. La borne n'a donc pas à aller déposer ou chercher un message dans un serveur Internet, sous l'autorité du combiné. Les bornes publiques sont en fait des cabines téléphoniques sans fil avec services accessoires

Avantageusement, les moyens de retransmission sont agencés, en cas de relève d'un message avec au moins une pièce jointe, pour séparer la pièce jointe et le message et pour retransmettre uniquement le message, sans la pièce jointe.

Il n'est donc pas nécessaire de prévoir, dans le combiné, de moyens pour lire des pièces jointes, qui peuvent être de types et de formats très variés.

Avantageusement encore, la base comprend des moyens de création de messages et des moyens d'émission de messages à travers le réseau informatique, et, le combiné comprenant des touches de clavier téléphonique, il est prévu des moyens pour convertir des appuis touches en caractères alphanumériques.

De préférence, les moyens pour convertir les appuis touches en caractères alphanumériques sont dans la base.

Ainsi, la base intègre également tous les moyens permettant d'envoyer les messages à travers le réseau informatique, la saisie des messages s'effectuant à l'aide de l'interface homme-machine du combiné.

L'invention sera mieux comprise à l'aide de la description suivante d'une forme de réalisation particulière du réseau téléphonique local de l'invention, en référence au dessin annexé sur lequel:

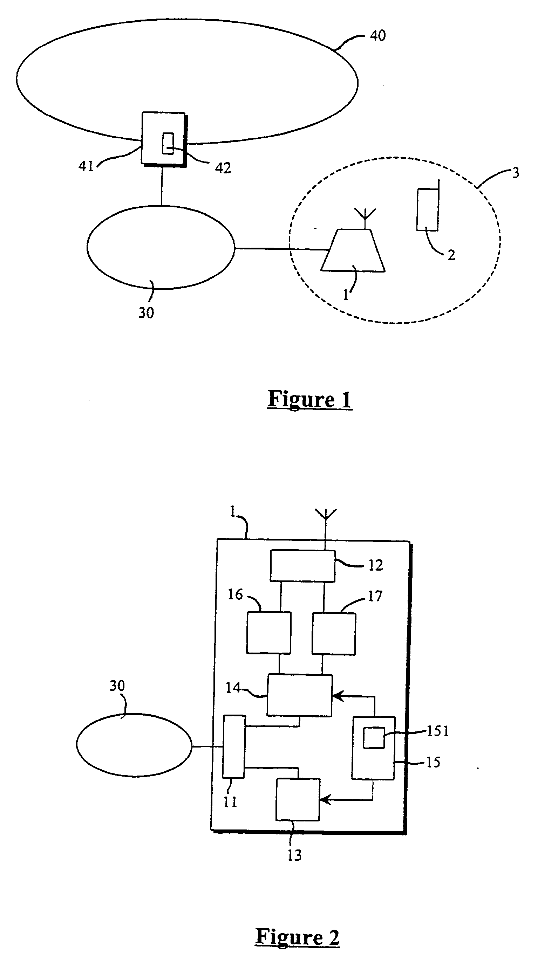

- la figure 1 représente une vue globale du réseau local relié à l'Internet par l'intermédiaire d'un réseau téléphonique,
- la figure 2 représente un schéma bloc fonctionnel de la base radio du réseau local de la figure 1,

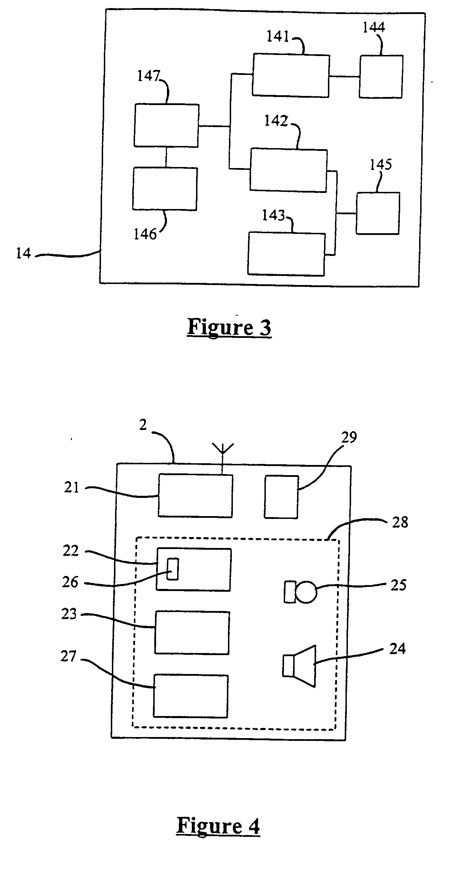

- la figure 3 représente un schéma bloc fonctionnel d'un bloc de messagerie Internet de la base de la figure 2 et
- la figure 4 représente un schéma bloc fonctionnel du combiné radio du réseau local de la figure 1.

Le réseau local de téléphonie radio 3, en l'espèce un réseau DECT, comprend une base radio DECT 1 et un combiné radio DECT 2, associé à la base 1, c'est-à-dire pouvant s'apparier à celle-ci.

Le réseau local 3 dispose d'un accès à un réseau informatique, ici l'Internet 40, et d'un service de messagerie Internet, fournis par un serveur 41. Celui-ci héberge une boîte à lettres 42, avec une adresse Internet de messagerie, attribuée au réseau local 3.

Par souci de clarté, seuls les éléments de la base 1 et du combiné 2, nécessaires à la compréhension de l'invention, vont maintenant être décrits.

La base DECT 1 comprend une interface ligne 11 de connexion à un réseau téléphonique externe 30, ici le réseau RTC, et un bloc 12 d'émission et de réception radio DECT. Outre les éléments classiques d'une base DECT, la base 1 comprend un bloc 13 de connexion à l'Internet 40, un bloc de messagerie Internet 14, un automate 15 de commande des blocs 13 et 14, un bloc 16 de retransmission des messages reçus et un convertisseur 17.

Le bloc de connexion 13, relié à l'interface ligne 11, permet à la base 1 de se connecter à l'Internet 40, à travers le réseau téléphonique 30, suivant un protocole de connexion téléphonique au serveur 41, en l'espèce le protocole PPP (Point to Point Protocol - Protocole point à point).

Le bloc de messagerie Internet 14, relié à l'interface ligne 11, comprend un module 141 de relève de boîte à lettres Internet, un module 142 de création de messages et un module 143 d'émission de messages à travers l'Internet 40.

On rappelle ici qu'un message Internet comprend un en-tête et un corps de message. L'en-tête contient, dans un champ de provenance, l'adresse de messagerie Internet de l'émetteur du message et, dans un champ de destination, l'adresse de messagerie Internet du récepteur du message. Le corps du message contient le message proprement dit. Une ou plusieurs pièces jointes, de types (son, image, texte, etc.) et de formats (WAV, JPEG, DOC, etc.) très divers, peuvent être attachées au message. Dans ce cas, le corps du message contient l'indication qu'une ou plusieurs pièces jointes sont attachées au message.

Le module de relève 141 est destiné à relever les messages reçus et provisoirement stockés dans la boîte à lettres 42, en utilisant le protocole standard POP de réception de messages. Une mémoire 144 de stockage des messages relevés est reliée au module 141.

Le module 142 est destiné à créer des messages. Des pièces jointes peuvent être attachées à ces messages, comme cela sera explicité plus loin.

Le module d'émission 143 est destiné à émettre des messages à travers l'Internet 40, par l'intermédiaire du serveur 41, en utilisant le protocole standard SMTP d'émission de messages.

Une mémoire 145 de stockage de messages en attente d'émission est reliée au module 142 de création de messages et au module 143 d'émission de messages.

Le bloc de messagerie 14 comprend en outre un module 146 de compression de données vocales et un module 147 d'édition de fichiers sons. Ce module 147, relié aux modules 146 et 142, permet de créer des fichiers sons, constituant des pièces jointes vocales, à partir de données vocales saisies par un utilisateur et comprimées par le module 146.

L'automate 15 comprend une horloge interne 151. Il est destiné à commander, de façon automatique, le bloc de connexion 13 et le bloc de messagerie 14 pour que, à intervalles de temps réguliers, par exemple toutes les heures, la base 1 se connecte automatiquement à l'Internet 100 et, après connexion, relève la boîte à lettres 42 et, le cas échéant, envoie un ou plusieurs messages en attente d'émission.

Le bloc de retransmission 16, relié au bloc de messagerie Internet 14 et au bloc radio 12, est destiné à commander la retransmission radio, vers le combiné 2, des messages relevés dans la boîte à lettres 42. En outre, dans le cas où une pièce jointe est attachée à un message à retransmettre, le bloc 16 est destiné à séparer la pièce jointe et le message, et à ne retransmettre vers le combiné 2 que le message, sans la pièce jointe.

Le convertisseur 17, relié au bloc radio 12 et au bloc de messagerie 14, est destiné à convertir des appuis touches, transmis par le combiné radio 1, en caractères alphanumériques, ici selon le protocole standard T9.

La base DECT 1 comprend un bloc central de commande, en l'espèce un microprocesseur, auquel tous les éléments de la base sont connectés et destiné à commander le fonctionnement de la base 1.

Le combiné radio DECT 2 comprend, de façon classique, un bloc 21 d'émission et de réception radio DECT et une interface homme-machine 28.

Cette interface homme-machine 28 comporte un clavier téléphonique 22, un afficheur rudimentaire 23, comportant ici quatre lignes, un écouteur 24, un microphone 25 et une application d'interface homme-machine 27.

L'écouteur 24 et le microphone 25 sont respectivement reliés à un convertisseur numérique-analogique (CNA) et à un convertisseur analogique-numérique (CAN), non représentés.

L'application d'interface homme-machine 27 gère l'affichage d'informations et de menus de commandes sur l'afficheur 23. Ces menus comprennent notamment des commandes spécifiques pour exploiter la messagerie Internet. A titre d'exemple, on peut citer les quelques commandes suivantes: consultation des nouveaux messages reçus, création d'un message et envoi d'un message.

Le clavier 22 comprend, outre des touches téléphoniques classiques, un navigateur 26 permettant, d'une part, de se déplacer dans les menus de commandes et de sélectionner l'une d'entre elles, et, d'autre part, de faire défiler des messages affichés sur l'afficheur 23.

Il est également prévu, dans le combiné 2, une mémoire 29 de stockage provisoire de messages.

Enfin, le combiné 2 comprend un bloc de commande, non représenté, auquel tous les éléments décrits ci-dessus sont reliés et destiné à en commander le fonctionnement.

Après la description structurelle et fonctionnelle du réseau local de téléphonie radio 3, son fonctionnement, pour l'exploitation de la messagerie Internet, va maintenant être explicité.

Sous la commande de l'automate 15, la base 1 se connecte toutes les heures à l'Internet 40, par connexion téléphonique, à travers le réseau 30, au fournisseur d'accès 41. Après connexion, la base 1 relève la boîte à lettres 42, afin de récupérer les éventuels messages reçus, et, le cas échéant, émet à travers l'Internet 40 un ou plusieurs messages en attente d'émission, enregistrés dans la mémoire 145. Les messages relevés sont placés dans la mémoire 144.

Pour prendre connaissance des nouveaux messages reçus, à l'aide du combiné 2, un utilisateur active la commande de consultation des nouveaux messages reçus, par sélection dans les menus. Le combiné 2 émet alors vers la base 1 une requête de consultation des nouveaux messages reçus, par voie radio. Sur réception de la requête, la base 1 transmet au combiné 2 le ou les nouveaux messages, préalablement relevés dans la boîte à lettres 42 et stockés dans la mémoire 144, par voie radio.

Dans 1e cas où une pièce jointe est attachée à l'un des messages à retransmettre, la base 1 sépare la pièce jointe et le message et transmet uniquement le message au combiné 2, sans la pièce jointe.

Les messages, retransmis par la base 1 au combiné 2, sont provisoirement stockés dans la mémoire 29, pour être affichés, l'un après l'autre, sur l'afficheur 23. A l'aide du navigateur 26, l'utilisateur fait défiler les messages sur l'afficheur 23 en les balayant. En fin de consultation, l'utilisateur commande la fin de l'opération en cours, par appui sur une touche spécifique du clavier 22. Les messages sont alors effacés de la mémoire 29.

Pour créer un message, à l'aide du combiné 2, l'utilisateur active la commande de création d'un nouveau message, par sélection dans les menus. Le combiné 2 demande alors à l'utilisateur de saisir le contenu du message, par affichage d'une requête sur l'afficheur 23. L'utilisateur saisit ces informations requises, à l'aide du clavier 22, une séquence prédéfinie d'appuis sur une touche correspondant à un caractère alphanumérique. Le combiné 2 transmet ces appuis touches à la base 1, par voie radio. La base 1 convertit les appuis touches en caractères alphanumériques et renvoie ces derniers vers le combiné 2 pour qu'il les affiche. Le message créé est par ailleurs stocké dans la mémoire 145 de la base 1.

Après avoir saisi le contenu du message, l'utilisateur active une commande d'envoi du message, par sélection dans les menus du combiné 2. Le combiné 2 envoie alors à la base 1 une requête d'envoi du message créé. Lors de sa connexion suivante à l'Internet 40, la base 1 émet le message à travers l'Internet 40.

Pour attacher une pièce jointe vocale à un message en cours de création, l'utilisateur active une commande d'attachement d'une pièce jointe vocale, par sélection dans les menus du combiné 2, et, à l'aide du microphone 25, saisit un message vocal. Le combiné 2 numérise le message vocal saisi et transmet les données vocales vers la base 1, avec l'indication selon laquelle elles sont destinées à la création d'une pièce jointe. La base 1 comprime les données vocales reçues puis les transforme en un fichier son, constituant la pièce jointe vocale, et enfin attache cette pièce jointe vocale au message créé.

On soulignera ici que le bloc de messagerie Internet 14 est intégré dans la base 1, alors que l'interface homme-machine 28, permettant d'utiliser cette messagerie Internet, est déportée dans le combiné 2.

On pourrait envisager que la base 1 transmette, au combiné 2, les messages, ligne par ligne, au fur et à mesure de leur défilement sur l'afficheur 23.

Dans une variante, le réseau local comprend une pluralité de combinés radios, ayant chacun une boîte à lettres associée, hébergée par le serveur de messagerie Internet. Lors de chaque connexion à l'Internet, la base relève la pluralité de boîtes à lettres et mémorise, le cas échéant, les messages relevés dans les différentes boîtes à lettres. Sur requête, la base retransmet ultérieurement le ou les messages relevés dans chaque boîte à lettres vers le combiné associé, sous la commande du bloc de retransmission.

Dans la description qui précède, la base se connecte automatiquement à l'Internet, à intervalles de temps réguliers, pour relever la ou les boîtes à lettres et pour émettre les éventuels messages en attente d'émission. En variante, on pourrait prévoir que la base effectue ces opérations sur requête d'un combiné, sous la commande d'un utilisateur.

Pour lire les pièces jointes des messages Internet reçus, on pourrait prévoir de relier la base radio à un équipement externe, par exemple un ordinateur, ayant les capacités appropriées.

## Revendications

1. Réseau téléphonique local (3) comportant une base radio (1) et au moins un combiné radio associé (2), dans lequel la base (1) intègre des moyens (13) de connexion à un réseau informatique (40) et des moyens de messagerie informatique (14), et il est prévu des moyens d'interface homme-machine (28), permettant d'utiliser la messagerie, déportés dans le combiné (2), **caractérisé par le fait que** la base (1) comprend des moyens (141) de relève de messages dans une boîte à lettres (42) du réseau informatique (40) et des moyens (16) de retransmission, vers le combiné (2), de messages relevés dans la boîte à lettres (42), et lesdits moyens d'interface homme-machine (28) comprennent un afficheur (23) et des moyens (26) pour faire défiler les messages sur l'afficheur (23).

2. Réseau selon la revendication 1, dans lequel les moyens de retransmission (16) sont agencés, en cas de relève d'un message avec au moins une pièce jointe, pour séparer la pièce jointe et le message et pour retransmettre uniquement le message, sans la pièce jointe.

3. Réseau selon l'une des revendications 1 et 2, dans lequel, une pluralité de combinés radios, respectivement associés à une pluralité de boîtes à lettres du réseau informatique, y étant prévus, les moyens de relève sont agencés pour relever la pluralité de boîtes à lettres et les moyens de retransmission sont agencés pour retransmettre les messages relevés dans chaque boîte à lettres vers le combiné associé.

4. Réseau selon l'une des revendications 1 à 3, dans lequel la base comprend des moyens (142) de création de messages et des moyens (143) d'émission de messages créés à travers le réseau informatique (40), et, le combiné (2) comprenant des touches de clavier téléphonique, il est prévu des moyens (17) pour convertir des appuis touches en caractères alphanumériques.

5. Réseau selon la revendication 4, dans lequel les moyens (17) pour convertir les appuis touches en caractères alphanumériques sont dans la base (1).

6. Réseau selon l'une des revendications 4 et 5, le combiné (2) comprenant un microphone (25), les moyens (142) de création de messages sont agencés pour créer une pièce jointe vocale, à partir de données vocales saisies à l'aide du microphone (25), et pour l'attacher à un message.

7. Réseau selon la revendication 6, dans lequel la base (1) comprend des moyens (146) pour comprimer lesdites données vocales pour la création d'une pièce jointe vocale.

## Claims

1. Local telephone network (3) comprising a radio base (1) and at least one associated radio handset (2), the base (1) integrating means (13) for connecting to a computer network (40) and computer messaging means (14), and man-machine interface means (28) being provided which allow use of messaging and are offset in the handset (2), **characterised in that** the base (1) comprises means (40) for logging messages in a mailbox (42) of the computer network (40) and means (16) for retransmitting, to the handset (2), messages logged in the mailbox (42), and said man-machine interface means (28) comprise a display (23) and means (26) for scrolling the messages on the display (23).

2. Network according to claim 1, wherein the retransmission means (16) are arranged, in the event that a message having at least one attachment is logged, to separate the attachment and the message and to retransmit only the message, without the attachment.

3. Network according to either claim 1 or claim 2, wherein, a plurality of radio handsets being provided therein which are respectively associated with a plurality of mailboxes of the computer network, the logging means are arranged to log the plurality of mailboxes and the retransmission means are arranged to retransmit the messages logged in each mailbox to the associated handset.

4. Network according to any of claims 1 to 3, wherein the base comprises means (142) for creating messages and means (143) for sending messages created across the computer network (40) and, since the handset (2) comprises telephone keypad keys, means (17) for converting key presses into alphanumeric characters are provided.

5. Network according to claim 4, wherein the means (17) for converting the key presses into alphanumeric characters are in the base (1).

6. Network according to either claim 4 or claim 5, since the handset (2) comprises a microphone (25), the means (142) for creating messages are arranged to create a voice attachment from voice data captured by means of the microphone (25) and to attach it to a message.

7. Network according to claim 6, wherein the base (1) comprises means (146) for compressing said voice data for the creation of a voice attachment.

## Patentansprüche

1. Lokales Telefonnetz (3), das eine Funkbasis (1) und mindestens ein zugeordnetes Funkhandgerät (2) aufweist, wobei die Basis (1) Mittel (13) zum Verbinden mit einem Computernetzwerk (40) und Computermessaging-Mittel (14) integriert und Mensch-Maschine-Schnittstellenmittel (28) vorgesehen sind, welche die Verwendung des Messaging ermöglichen, die in das Handgerät (2) ausgelagert sind, **dadurch gekennzeichnet, dass** die Basis (1) Mittel (141) zum Protokollieren von Nachrichten in einer Mailbox (42) des Computernetzwerks (40) und Mittel (16) zum Weiterübertragen von Nachrichten, die in der Mailbox (42) protokolliert wurden, an das Handgerät (2) umfasst und die Mensch-Maschine-Schnittstellenmittel (28) eine Anzeige (23) und Mittel (26), um die Nachrichten auf der Anzeige (23) durchlaufen zu lassen, umfasst.

2. Netz nach Anspruch 1, wobei die Weiterübertragungsmittel (16) eingerichtet sind, um, für den Fall der Protokollierung einer Nachricht mit mindestens einer Anlage, die Anlage und die Nachricht zu trennen und nur die Nachricht, ohne die Anlage, weiterzuübertragen.

3. Netz nach einem der Ansprüche 1 und 2, wobei eine Vielzahl von Funkhandgeräten, die jeweils einer Vielzahl von Mailboxen des Computernetzwerks zugeordnet sind, darin vorgesehen sind, die Protokollierungsmittel dafür eingerichtet sind, die Vielzahl von Mailboxen zu protokollieren, und die Weiterübertragungsmittel dafür eingerichtet sind, die in jeder Mailbox protokollierten Nachrichten an das zugeordnete Funkhandgerät weiterzuübertragen.

4. Netz nach einem der Ansprüche 1 bis 3, wobei die Basis Mittel (142) zum Erzeugen von Nachrichten und Mittel (143) zum Senden von erzeugten Nachrichten über das Computernetzwerk (40) umfasst und, da das Handgerät (2) Telefontasten umfasst, Mittel (17) vorgesehen sind, um Tastendrücke in alphanumerische Zeichen umzuwandeln.

5. Netz nach Anspruch 4, wobei die Mittel (17) zum Umwandeln der Tastendrücke in alphanumerische Zeichen in der Basis (1) sind.

6. Netz nach einem der Ansprüche 4 und 5, wobei, da das Handgerät (2) ein Mikrophon (25) umfasst, die Mittel (142) zum Erzeugen von Nachrichten eingerichtet sind, um, ausgehend von Sprachdaten, die mit Hilfe des Mikrophons (25) erfasst werden, eine Sprachanlage zu erzeugen und um sie mit einer Nachricht zu verbinden.

7. Netz nach Anspruch 6, wobei die Basis (1) Mittel (146) umfasst, um die Sprachdaten für die Erzeugung einer Sprachanlage zu komprimieren.
